# EUROPÄISCHE PATENTSCHRIFT

(11) **EP 4 351 970 B1**
(45) Veröffentlichungstag und Bekanntmachung des Hinweises auf die Patenterteilung: **12.02.2025**
(21) Anmeldenummer: 22726586.5
(22) Anmeldetag: 19.05.2022
(51) Int. Cl.: B64D 27/24

(54) **LUFTFAHRZEUG MIT EINER BRENNSTOFFZELLE UND VERFAHREN ZUM BETRIEB EINER BRENNSTOFFZELLE EINES LUFTFAHRZEUGS**
AIRCRAFT HAVING A FUEL CELL AND METHOD FOR OPERATING A FUEL CELL OF AN AIRCRAFT
AÉRONEF ÉQUIPÉ D'UNE PILE À COMBUSTIBLE ET PROCÉDÉ DE FONCTIONNEMENT D'UNE PILE À COMBUSTIBLE D'UN AÉRONEF

(30) Priorität: 11.06.2021 DE 102021115226
(43) Veröffentlichungstag der Anmeldung: 17.04.2024
(73) Patentinhaber: MTU Aero Engines AG, 80995 München (DE)
(72) Erfinder: LELLEK, Stephan, 80995 München (DE); HÄGERT, Jan, 80995 München (DE)
(86) Internationale Anmeldenummer: PCT/DE2022/100385
(87) Internationale Veröffentlichungsnummer: WO 2022/258104

(56) Entgegenhaltungen:
- EP-A1- 3 043 408
- US-A1- 2007 298 308
- US-A1- 2020 075 971

## Beschreibung

Die Erfindung betrifft ein Luftfahrzeug mit einer Brennstoffzelle sowie ein Verfahren zum Betrieb einer Brennstoffzelle eines Luftfahrzeugs mit einer Luftversorgungseinrichtung zum Betrieb der Brennstoffzelle sowie zum Kühlen eines mit der Brennstoffzelle verbundenen Wärmetauschers.

In Luftfahrzeugen angeordnete Brennstoffzellen erzeugen große Wärmemengen, welche über Wärmetauscher abgeführt werden. Entsprechend werden die Wärmetauscher von in Luftfahrzeugen betriebenen Brennstoffzellen, insbesondere wenn diese zum Erzeugen der Antriebsenergie des Luftfahrzeugs eingesetzt werden, häufig so innerhalb eines luftdurchströmten Bereichs wie der Triebwerksgondel oder innerhalb eines Luftkanals angeordnet, dass Staudruckluft (ram air) und/ oder Propeller-Abwind (downwash air) zur Kühlung wenigstens eines Wärmetauschers der Brennstoffzelle(n) verwendet werden können. Dabei wird üblicherweise ein Luftstrom auf wenigstens eine Kühlfläche des Wärmetauschers geleitet, um Wärmeenergie vom Wärmetauscher aufzunehmen. Darüber hinaus benötigen Brennstoffzellen für deren Betrieb neben einem Brennstoff ein Oxidationsmittel, welches im Falle von in Luftfahrzeugen eingesetzten Brennstoffzellen üblicherweise von Luft bzw. dem darin enthaltenen Sauerstoff gebildet wird, wobei die Luft zum Erreichen eines hohen Wirkungsgrads der Brennstoffzelle verdichtet wird. Nachteilig an bekannten Luftversorgungseinrichtungen ist die sich durch Einrichtungen zum Aufnehmen und Leiten von Staudruckluft und/ oder Propeller-Abwind verschlechternde Aerodynamik des Luftfahrzeugs sowie die zum Verdichten der Luft vor deren Zuführung zur Brennstoffzelle erforderliche Energie.

Ein Luftfahrzeug mit einer Luftversorgungseinrichtung für Brennstoffzellen ist aus EP 3 043 408 A bekannt. Weitere beispielhafte Luftversorgungseinrichtungen für Brennstoffzellen sind aus den Dokumenten US2020075971A1 und US2007298308A1 bekannt.

Hiervon ausgehend ist es eine Aufgabe der vorliegenden Erfindung, ein verbessertes Luftfahrzeug mit einer Brennstoffzelle und einer Luftversorgungseinrichtung vorzuschlagen. Ferner wird ein verbessertes Verfahren zum Betrieb einer Brennstoffzelle eines Luftfahrzeugs mit einer Luftversorgungseinrichtung zur Verfügung gestellt. Dies wird erfindungsgemäß durch die Lehre der unabhängigen Ansprüche erreicht. Vorteilhafte Ausgestaltungen der Erfindung sind Gegenstand der Unteransprüche.

Zur Lösung der Aufgabe wird ein Luftfahrzeug mit einer Brennstoffzelle und einer Luftversorgungseinrichtung zum Zuführen von Luft zum Betrieb der Brennstoffzelle sowie zum Kühlen eines mit der Brennstoffzelle verbundenen Wärmetauschers vorgeschlagen. Das Luftfahrzeug weist dabei wenigstens einen Luftkanal auf, dessen Querschnitt sich in Strömungsrichtung der Luft nach einer Lufteinlassöffnung in wenigstens einem Bereich der Umfangsfläche erweitert. Der Luftkanal weist in dem wenigstens einen sich erweiternden Bereich der Umfangsfläche wenigstens eine Durchströmungsöffnung auf, durch welche Luft zum Betrieb der Brennstoffzelle abführbar ist.

Die Erfindung betrifft Luftfahrzeuge, wie insbesondere Flugzeuge, Hubschrauber oder auch unbemannte Fluggeräte, welche wenigstens eine Brennstoffzelle mit einem zur Kühlung der Brennstoffzelle verbundenen Wärmetauscher aufweisen. Dabei ist der Wärmetauscher dazu eingerichtet, Wärmeenergie beispielsweise über Kühlflächen insbesondere an die Umgebung abzugeben. Ein die Kühlflächen überstreichender Luftstrom kann dabei Wärmeenergie vom Wärmetauscher aufnehmen. Als Brennstoffzelle wird eine elektrochemische Vorrichtung bezeichnet, die Wärme und elektrische Energie aus einem Brennstoff und einem Oxidationsmittel erzeugt. Bekannte Brennstoffzellen nutzen beispielsweise Wasserstoff als Brennstoff und insbesondere in der Umgebungsluft enthaltenen Sauerstoff als Oxidationsmittel. Brennstoffzellen sind üblicherweise in Form von Brennstoffzellenstapeln ausgebildet, welche im Rahmen der Beschreibung der Erfindung angelehnt an den üblichen Sprachgebrauch vereinfacht als "Brennstoffzelle" bezeichnet werden.

Das Luftfahrzeug weist wenigstens einen Luftkanal mit wenigstens einer Lufteinlassöffnung auf, welche wenigstens überwiegend in Flugrichtung des Luftfahrzeugs angeordnet ist, um dem Luftkanal insbesondere während des Flugs Luft aus der Umgebung des Luftfahrzeugs zuzuführen. Die wenigstens eine Lufteinlassöffnung ist dabei an einer geeigneten Position an der Außenhaut des Luftfahrzeugs wie insbesondere an einem Rumpf oder einer Tragfläche angeordnet. Insbesondere ist die Lufteinlassöffnung so positioniert, dass durch diese dem Luftkanal Staudruckluft oder Propeller-Abwind zugeführt wird.

Der Luftkanal ist dabei so ausgeführt, dass sich dessen Querschnitt in Strömungsrichtung der Luft nach der Lufteinlassöffnung in wenigstens einem Bereich der Umfangsfläche erweitert. Entsprechend ist der Luftkanal in der Art eines Diffusors ausgebildet, wodurch sich die Strömungsgeschwindigkeit der diesen Abschnitt durchströmenden Luft verringert, wobei der Luftdruck gleichzeitig steigt. Der Querschnitt des Luftkanals erweitert sich dabei in wenigstens einem Bereich der Wandung, so dass diese in dem wenigstens einen Bereich sich erweiternd ausgebildet ist, beispielsweise mit einem geneigt gegenüber der Längsrichtung des Luftkanals angeordneten Öffnungswinkel. Gleichzeitig kann die Wandung in wenigstens einem anderen Bereich des Luftkanalquerschnitts beispielsweise einen größeren oder kleineren Öffnungswinkel aufweisen oder parallel zur Längsrichtung des Luftkanals ausgerichtet sein. Grundsätzlich kann die Wandung auch gleichmäßig und/ oder zumindest abschnittsweise rotationssymmetrisch über den Umfang verteilt sich erweiternd ausgebildet sein.

Bei der vorgeschlagenen Gestaltung weist der Luftkanal in dem wenigstens einen sich erweiternden Bereich der Umfangsfläche wenigstens eine Durchströmungsöffnung auf, durch welche Luft zum Betrieb der Brennstoffzelle aus dem Luftkanal abführbar ist. Insbesondere ist die wenigstens eine Durchströmungsöffnung dabei so ausgeführt und angeordnet, dass durch diese unmittelbar an der Wandung des sich erweiternden Bereichs der Umfangsfläche vorbei- bzw. entlangströmende Luft abgeführt wird. Dies ist insbesondere bei sich mit größeren Öffnungswinkeln erweiternden Bereichen vorteilhaft, in welchen die Gefahr des Ablösens der Grenzschicht des Luftstroms besteht. Durch das Abführen der an der Wandung vorbeiströmenden Luft kann eine Stabilisierung der idealerweise laminaren Grenzschicht und eine Verringerung der Ablösegefahr der Luftströmung erreicht werden kann. Insbesondere unter Berücksichtigung der Strömungsverhältnisse an Umfangsfläche können in einem sich erweiternden Bereich der Umfangsfläche daher eine oder mehrere gleichmäßig oder in anderer Weise geeignet verteilte Durchströmungsöffnungen gleicher oder unterschiedlicher Größe angeordnet sein.

Die vorgeschlagene Gestaltung des Luftkanals mit sich erweiternden Querschnitt des Luftkanals nach der Lufteinlassöffnung in wenigstens einem sich erweiternden Bereich, führt zu einer Diffusorwirkung auf die den Luftkanal durchströmenden Luft, welche in einer Verringerung der Strömungsgeschwindigkeit bei gleichzeitiger Druckerhöhung resultiert. Dadurch, dass im Luftkanal nach einer Einlassöffnung der Luftdruck steigt, weist auch die durch die wenigstens eine Durchströmungsöffnung abführbare Luft einen erhöhten Druck auf, so dass der Energieaufwand zum Verdichten der für den Betrieb der Brennstoffzelle dieser zugeführten Luft entsprechend reduzierbar ist. Auf diese Weise ermöglicht die vorgeschlagene Lösung eine Funktionsintegration basierend auf der Erhöhung des Luftdrucks bei einer gleichzeitigen Verringerung der Strömungsgeschwindigkeit der Luft, um die Kühlwirkung für den Wärmetauscher sowie die Zuführung verdichteter Luft zur Brennstoffzelle zu verbessern und darüber hinaus das Risiko eines Ablösens der Luft von der Wandung im sich erweiternden Bereich des Luftkanals zu verringern.

Bei einer Ausführungsform des Luftfahrzeugs ist der Wärmetauscher in dem erweiterten Querschnitt des Luftkanals angeordnet. Wie bereits dargelegt führt die Diffusorwirkung des sich erweiternden Luftkanals in Strömungsrichtung vor dem erweiterten Querschnitt des Luftkanals zu einer Verringerung der Strömungsgeschwindigkeit der eingelassenen Luft bei gleichzeitiger Druckerhöhung. Damit können günstige Strömungsbedingungen der Luft für das Abführen von Wärmeenergie von Kühlflächen eines in dem erweiterten Querschnitt des Luftkanals angeordneten Wärmetauschers erreicht werden.

Bei einer Ausführungsform des Luftfahrzeugs verringert sich der Querschnitt des Luftkanals in Strömungsrichtung vor einer Luftauslassöffnung. Dabei verringert sich der Querschnitt des Luftkanals in wenigstens einem Bereich der Umfangsfläche. Dieser sich verjüngendem Bereich des Luftkanals ist insbesondere hinter dem wenigstens einen Wärmetauscher angeordnet. Der Querschnitt des Luftkanals verringert sich dabei in wenigstens einem Bereich der Wandung, so dass diese in dem wenigstens einen Bereich sich verjüngend ausgebildet ist, beispielsweise mit einem geneigt gegenüber der Längsrichtung des Luftkanals angeordneten Verjüngungswinkel. Gleichzeitig kann die Wandung in wenigstens einem anderen Bereich des Luftkanalquerschnitts beispielsweise einen größeren oder kleineren Verjüngungswinkel aufweisen oder parallel zur Längsrichtung des Luftkanals ausgerichtet sein. Grundsätzlich kann die Wandung auch gleichmäßig und/ oder zumindest abschnittsweise rotationssymmetrisch über den Umfang verteilt sich verjüngend ausgebildet sein. Entsprechend ist der Luftkanal in der Art einer Düse ausgebildet, wodurch die Strömungsgeschwindigkeit der diesen Abschnitt durchströmenden Luft steigt, während der Luftdruck sinkt. Die düsenartige Gestaltung des Luftkanals vor einer Luftauslassöffnung führt zu einer Beschleunigung des Luftstroms und so zu einer erhöhten Strömungsgeschwindigkeit der ausströmenden Luft, woraus eine zusätzliche Schubwirkung für das Luftfahrzeug resultiert.

Bei einer Ausführungsform des Luftfahrzeugs weist der Luftkanal wenigstens eine Luftzufuhröffnung zum Zuführen von Abluft der Brennstoffzelle vor einer Luftauslassöffnung auf. So wird die Abluft der Brennstoffzelle wieder dem Luftkanal zugeführt, aus dem sie entnommen wurde. Darüber hinaus wird dem Luftkanal dabei zusätzliche Wärmeenthalpie zugeführt, welche die Gesamtenthalpie der ausströmenden Luft vor der Luftauslassöffnung zusätzlich erhöht und damit die Schutzwirkung weiter verstärkt.

Bei einer Ausführungsform des Luftfahrzeugs ist die wenigstens eine Durchströmungsöffnung mit einem Luftzufuhrkanal zum Zuführen der Luft zur Brennstoffzelle, insbesondere als Oxidationsmittel für den Betrieb und/ oder zum Kühlen der Brennstoffzelle verbunden. Der Luftzufuhrkanal weist dabei eine Verdichtereinrichtung zum Verdichten der Luft vor dem Zuführen der Luft zur Brennstoffzelle auf. Gleichzeitig oder alternativ kann die Verdichtereinrichtung zum Absaugen der Luft durch die Durchströmungsöffnung aus dem Luftkanal vorgesehen sein. Insbesondere durch die Diffusorwirkung in dem Bereich, in dem die wenigstens eine Durchströmungsöffnung angeordnet ist, weist die durch die Durchströmungsöffnung aus dem Luftkanal abführbare Luft regelmäßig einen erhöhten Druck gegenüber der Umgebung auf. Abhängig von den Randbedingungen (insbesondere Umgebungsdruck, Umgebungstemperatur, Fluggeschwindigkeit, Gestaltung des Luftkanals) kann das Druckgefälle zwischen dem Luftkanal und dem Luftzufuhrkanal zur Brennstoffzelle bereits ausreichen, um Luft durch die wenigstens eine Durchströmungsöffnung aus dem Luftkanal abzuführen. Insbesondere wenn kein ausreichendes Druckgefälle vorliegt, kann mittels der Verdichtereinrichtung ein geeignetes Druckgefälle erzeugt werden, um eine ausreichende Menge Luft aus dem Luftkanal zur Brennstoffzelle zu führen. Zusätzlich oder alternativ kann die Luft mittels der Verdichtereinrichtung vor dem Zuführen zur Brennstoffzelle insbesondere weiter verdichtet werden, um einen geeigneten Druck der Luft zum Betreiben der Brennstoffzelle insbesondere mit einem geeigneten Wirkungsgrad einzustellen.

Bei einer Ausführungsform des Luftfahrzeugs ist die Brennstoffzelle Teil des Flugantriebs. Dabei kann die mittels der Brennstoffzelle erzeugte Energie die Hauptantriebsquelle für den Flugantrieb sein oder diesen ergänzen. Bei einer anderen Ausführungsform des Luftfahrzeugs wird die mittels der Brennstoffzelle erzeugte Energie wenigstens teilweise für andere als Antriebseinrichtungen des Fluggeräts zur Verfügung gestellt, wie beispielsweise zum Antrieb von Hilfsaggregaten oder für die Bordstromversorgung.

In einem weiteren Aspekt der Erfindung wird ein Verfahren zum Betreiben einer Brennstoffzelle eines Luftfahrzeugs mit einer Luftversorgungseinrichtung für den Betrieb der Brennstoffzelle sowie zum Kühlen eines mit der Brennstoffzelle verbundenen Wärmetauschers vorgeschlagen. Das Luftfahrzeug weist dabei wenigstens einen Luftkanal auf, dessen Querschnitt sich in Strömungsrichtung der Luft nach einer Lufteinlassöffnung in wenigstens einem Bereich der Umfangsfläche erweitert, in welchem wenigstens eine Durchströmungsöffnung zum Abführen von Luft zum Betrieb der Brennstoffzelle angeordnet ist.

Das Verfahren weist die folgenden Schritte auf:
a) Führen von Luft durch die Lufteinlassöffnung in den Luftkanal;
b) Verdichten der Luft im Luftkanal nach der Lufteinlassöffnung;
c) Abführen von verdichteter Luft aus dem Luftkanal durch die wenigstens eine Durchströmungsöffnung;
d) Führen der Luft von der Durchströmungsöffnung zur Brennstoffzelle;
e) Leiten der verdichteten Luft auf wenigstens eine Kühlfläche des Wärmetauschers; und
f) Abführen der Luft aus dem Luftkanal.

In einem ersten Verfahrensschritt wird Luft durch die Lufteinlassöffnung in den Luftkanal geführt. Die Lufteinlassöffnung kann selbstverständlich auch mehrteilig ausgeführt sein. Üblicherweise ist die Lufteinlassöffnung in Flugrichtung an einer insbesondere zur Aufnahme von Staudruckluft und/ oder Propeller-Abwind günstigen Position des Luftfahrzeugs angeordnet, wodurch in einer Flugphase ausreichend Luft in den Luftkanal geführt wird. Selbstverständlich ist es auch möglich, dass zusätzliche Einrichtungen wie wenigstens ein Lüfterrad oder dergleichen zum Führen von Luft durch die Lufteinlassöffnung in den Luftkanal vorgesehen sind.

In einem weiteren Schritt wird die Luft im Luftkanal nach der Lufteinlassöffnung verdichtet. Der Querschnitt des zur Durchführung des Verfahrens vorgeschlagenen Luftkanals erweitert sich in Strömungsrichtung der Luft nach der Lufteinlassöffnung in wenigstens einem Bereich der Umfangsfläche. Entsprechend ist der Luftkanal in der Art eines Diffusors ausgebildet, wodurch sich die Strömungsgeschwindigkeit der diesen Abschnitt durchströmenden Luft verringert und der Luftdruck gleichzeitig steigt. Selbstverständlich ist es auch möglich, weitere Einrichtungen im Luftkanal zur insbesondere zusätzlichen Verdichtung der Luft vorzusehen.

In weiteren Verfahrensschritten wird verdichtete Luft durch die wenigstens eine Durchströmungsöffnung aus dem Luftkanal abgeführt und zur Brennstoffzelle geführt. Die wenigstens eine Durchströmungsöffnung ist dabei insbesondere so ausgeführt und angeordnet, dass durch diese unmittelbar an der Wandung des sich erweiternden Bereichs der Umfangsfläche vorbei- bzw. entlangströmende Luft abgeführt werden kann. Auf diese Weise kann eine Stabilisierung der idealerweise laminaren Grenzschicht an der Wandung des Luftkanals und eine Verringerung der Ablösegefahr der Luftströmung in sich erweiternden Bereichen des Luftkanals erreicht werden.

In einem weiteren Schritt wird die durch die wenigstens eine Durchströmungsöffnung aus dem Luftkanal abgeführte insbesondere durch die Diffusorwirkung im Luftkanal verdichtete Luft auf wenigstens eine Kühlfläche des Wärmetauschers geleitet. Durch die Diffusorwirkung des sich erweiternden Querschnitt des Luftkanals steigt der Druck der Luft, gleichzeitig sinkt aber auch die Strömungsgeschwindigkeit, so dass durch das vorgeschlagene Verfahren zusätzlich günstige Strömungsbedingungen zur Wärmeaufnahme der Luft beim Überstreichen von Kühlflächen des wenigstens einen Wärmetauschers hergestellt werden. Schließlich wird die Luft wieder aus dem Luftkanal insbesondere in die Umgebung abgeführt, wobei die Luft während dem Verfahren Energie zum Erzeugen eines zusätzlichen Schubs aufgenommen hat.

Das vorgeschlagene Verfahren ermöglicht so eine energetisch günstige Versorgung wenigstens einer Brennstoffzelle mit Luft zu deren Betrieb sowie zur Kühlung des mit dieser verbundenem Wärmetauschers. Abhängig von der Gestaltung des Luftkanals kann durch das Verfahren auch zusätzlicher Schub für das Luftfahrzeug zur Verfügung gestellt werden.

Bei einer Ausführungsform des Verfahrens erfolgt das Abführen der Luft durch die wenigstens eine Durchströmungsöffnung mithilfe eines Sogs, so dass die Luft durch die wenigstens eine Durchströmungsöffnung abgesaugt wird. Dies kann insbesondere dann erforderlich sein, wenn das Druckgefälle an der wenigstens einen Durchströmungsöffnung nicht ausreicht, um eine ausreichende Luftmenge aus dem Luftkanal abzuführen. Der Sog kann dabei insbesondere mit einer im Luftzufuhrkanal von der Durchströmungsöffnung zur Brennstoffzelle angeordneten Verdichtereinrichtung erzeugt werden.

Eine Ausführungsform des Verfahrens weist als weiteren Schritt ein Verdichten der von der Durchströmungsöffnung zur Brennstoffzelle geführten Luft auf. Auch dieser Schritt kann insbesondere dann erforderlich sein, wenn der Druck der über die wenigstens eine Durchströmungsöffnung aus dem Luftkanal entnommenen Luft geringer ist, als zur Zuführung zur Brennstoffzelle für deren Betrieb nötig ist. Der Sog kann dabei insbesondere mit einem im Luftzufuhrkanal von der Durchströmungsöffnung zur Brennstoffzelle angeordneten Verdichter erzeugt werden. Insbesondere ist es möglich, für eine Kombination des Abführens der Luft durch die wenigstens eine Durchströmungsöffnung mithilfe eines Sogs sowie zum Verdichten der zur Brennstoffzelle geführten Luft eine gemeinsame, insbesondere in der Luftzuführleitung angeordneten Verdichtereinrichtung zu verwenden.

Eine Ausführungsform des Verfahrens weist als weiteren Schritt ein Beschleunigen der Luft im Luftkanal nach dem wenigstens einem Wärmetauscher auf. Damit kann die Luft bei einem nachfolgenden Abführen an die Umgebung zusätzlichen Schub für das Luftfahrzeug zur Verfügung stellen. Da für das Aufnehmen von Wärmeenergie vom Wärmetauscher eine geringere Geschwindigkeit der Luftströmung vorteilhaft ist, erfolgt ein Beschleunigen der Luft vorteilhaft erst nach der Aufnahme von Wärmeenergie vom Wärmetauscher. Insbesondere kann dieses Beschleunigen durch eine Verjüngung des Querschnitts des Luftkanals nach dem Wärmetauscher erfolgen. Die am Wärmetauscher erfolgte energetische Anreicherung der Luft ermöglicht eine höhere Beschleunigung und Strömungsgeschwindigkeit an der Luftauslassöffnung und damit das Erreichen eines zusätzlichen Schubs beim Abführen der Luft an die Umgebung.

Eine Ausführungsform des Verfahrens weist als weiteren Schritt ein Zuführen der Abluft aus der Brennstoffzelle in den Luftkanal nach dem Wärmetauscher auf. Die Abluft der Brennstoffzelle weist eine gegenüber der Umgebungsluft erhöhte Wärmeenthalpie auf, so dass durch das Zuführen der Abluft in den Luftkanal nach dem Wärmetauscher, insbesondere in Verbindung mit einer Beschleunigung der Luft in diesem Abschnitt des Luftkanals, zusätzlicher Schub beim Abführen der Luft aus der Luftauslassöffnung an die Umgebung ermöglicht wird.

Bei einer Ausführung des Verfahrens zum Betrieb einer Brennstoffzelle eines Luftfahrzeugs ist das Luftfahrzeug gemäß wenigstens einem Aspekt des vorausgehend beschriebenen Luftfahrzeugs ausgebildet. Insbesondere kann das Luftfahrzeug ein oder mehrere Merkmale und Eigenschaften des vorausgehend beschriebenen Luftfahrzeugs aufweisen, insbesondere zur Durchführung des vorgeschlagenen Verfahrens.

Da das vorgeschlagene Luftfahrzeugs sowie das vorgeschlagene Verfahrens auf einem gemeinsamen Grundgedanken beruhen, stellen die dargestellten Merkmale und Eigenschaften des vorgeschlagenen Luftfahrzeugs sowie auch des vorgeschlagenen Verfahrens wechselweise auch Merkmale und Eigenschaften für wenigstens optionale Ausgestaltungen des Luftfahrzeugs und des Verfahren dar und sollen daher auch jeweils für die wechselweisen Aspekte als offenbart gelten.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1: eine schematische Darstellung einer Luftversorgungseinrichtung eines beispielhaften erfindungsgemäßen Luftfahrzeugs;
- Fig. 2: eine schematische Darstellung eines Ausschnitts eines beispielhaften erfindungsgemäßen Luftfahrzeugs; und
- Fig. 3: eine schematische Darstellung eines Ablaufdiagramms des erfindungsgemäßen Verfahrens.

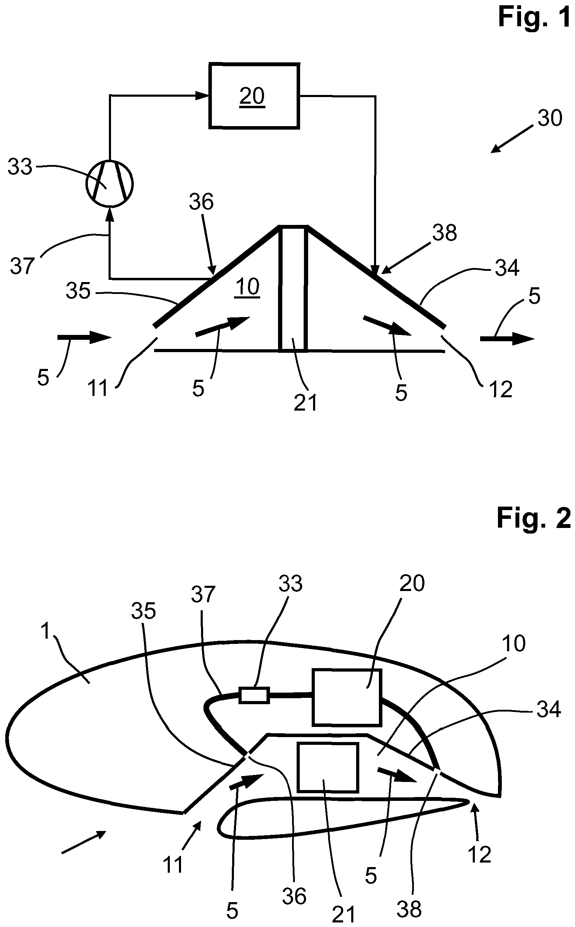

**Fig. 1** zeigt eine schematische Darstellung einer Luftversorgungseinrichtung 30 eines beispielhaften erfindungsgemäßen Luftfahrzeugs. Die Luftversorgungseinrichtung 30 ist mit einer Brennstoffzelle 20 verbunden, um dieser Luft zum Betrieb zuzuführen. Die Kühlung der Brennstoffzelle 20 erfolgt durch einen Wärmetauscher 21, welcher in einem Luftkanal 10 angeordnet ist. Der Querschnitt des Luftkanals erweitert sich in Strömungsrichtung 5 der Luft nach einer Lufteinlassöffnung 11 in einem Bereich 35 der Umfangsfläche. Darüber hinaus weist der Luftkanal 10 in dem wenigstens einen sich erweiternden Bereich 35 der Umfangsfläche eine Durchströmungsöffnung 36 auf, durch welche der Brennstoffzelle 20 mittels einem Luftzufuhrkanal 37 Luft für deren Betrieb zuführbar ist. Der Luftzufuhrkanal 37 weist eine Verdichtereinrichtung 33 zum Verdichten der Luft vor dem Zuführen zur Brennstoffzelle 20 und/ oder zum Absaugen der Luft durch die Durchströmungsöffnung 36 aus dem Luftkanal 10 auf.

In der schematischen Darstellung in Fig. 1 ist der Wärmetauscher 21 in dem erweiterten Querschnitt des Luftkanals 10 angeordnet. Der Querschnitt des Luftkanals 10 verringert sich in Strömungsrichtung 5 nach dem Wärmetauscher 21 vor der Luftauslassöffnung 12 in wenigstens einem Bereich 34. Dabei weist der Luftkanal 10 in dem sich verjüngenden Bereich 34 eine Luftzufuhröffnung 38 zum Zuführen von Abluft der Brennstoffzelle 20 auf.

**Fig. 2** zeigt eine schematische Darstellung eines Ausschnitts eines beispielhaften erfindungsgemäßen Luftfahrzeugs 1 mit einem Schnitt durch einen Luftkanal 10. Das Luftfahrzeug 1 weist eine Brennstoffzelle 20 und eine Luftversorgungseinrichtung 30 zum Zuführen von Luft zum Betrieb der Brennstoffzelle 20 sowie zum Kühlen eines mit der Brennstoffzelle 20 verbundenen Wärmetauschers 21 auf. Das Luftfahrzeug 1 bzw. die Luftversorgungseinrichtung 30 weist wenigstens einen Luftkanal 10 auf, dessen Querschnitt sich in Strömungsrichtung 5 der Luft nach einer Lufteinlassöffnung 11 in wenigstens einem Bereich 35 der Umfangsfläche erweitert. Der Luftkanal 10 weist in dem wenigstens einen sich erweiternden Bereich 35 der Umfangsfläche wenigstens eine Durchströmungsöffnung 36 auf, durch welche Luft zum Betrieb der Brennstoffzelle 20 abführbar ist. Die Brennstoffzelle 20 der beispielhaften Ausführungsform stellt einen Teil des Flugantriebs des Luftfahrzeugs 1 dar.

In der dargestellten beispielhaften Ausführungsform des vorgeschlagenen Luftfahrzeugs 1 ist der Wärmetauscher 21 in dem erweiterten Querschnitt des Luftkanals 10 angeordnet. Der Querschnitt des Luftkanals 10 verringert sich in Strömungsrichtung 5 nach dem Wärmetauscher 21 vor der Luftauslassöffnung 12 in wenigstens einem Bereich 34. Dabei weist der Luftkanal 10 in dem sich verringernden Bereich 34 wenigstens eine Luftzufuhröffnung 38 zum Zuführen von Abluft der Brennstoffzelle 20 auf.

Die wenigstens eine Durchströmungsöffnung 36 ist mit einem Luftzufuhrkanal 37 zum Zuführen der Luft zur Brennstoffzelle 20 verbunden, wobei im Luftzufuhrkanal 37 eine Verdichtereinrichtung 33 angeordnet ist, zum Verdichten der Luft vor dem Zuführen zur Brennstoffzelle 20 und/ oder zum Absaugen der Luft durch die Durchströmungsöffnung 36 aus dem Luftkanal 10.

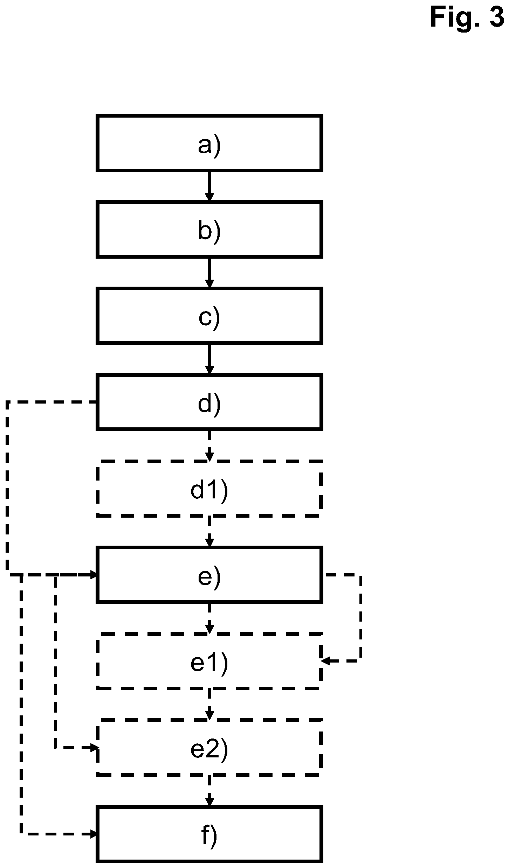

**Fig. 3** zeigt eine schematische Darstellung eines Ablaufdiagramms des erfindungsgemäßen Verfahrens zum Betrieb einer Brennstoffzelle 20 eines Luftfahrzeugs 1. Eine beispielshafte Ausführung eine solche Luftfahrzeugs ist beispielsweise in Fig. 2 dargestellt. Das Luftfahrzeug 1 weist eine Luftversorgungseinrichtung 30 zum Betreiben einer Brennstoffzelle 20 sowie zum Kühlen eines mit der Brennstoffzelle 20 verbundenen Wärmetauschers 21 auf. Ferner weist das Luftfahrzeug 1 wenigstens einen Luftkanal 10 auf, dessen Querschnitt sich in Strömungsrichtung 5 der Luft nach einer Lufteinlassöffnung 11 in wenigstens einem Bereich 35 der Umfangsfläche erweitert, in welchem eine Durchströmungsöffnung 36 zum Abführen von Luft zum Betrieb der Brennstoffzelle 20 angeordnet ist.

In einem ersten Verfahrensschritt a) wird Luft durch die Lufteinlassöffnung 11 in den Luftkanal 10 geführt und in einem zweiten Schritt b) wird die Luft im Luftkanal 10 nach der Lufteinlassöffnung 11 beispielsweise mittels einer im Luftkanal ausgebildete Diffusorwirkung verdichtet. In einem dritten Verfahrensschritt c) wird verdichtete Luft durch eine Durchströmungsöffnung 36 aus dem Luftkanal 10 abgeführt und in einem nächsten Schritt d) zur Versorgung der Brennstoffzelle 20 geführt.

In einem optionalen Verfahrensschritt d1) wird die von der Durchströmungsöffnung 36 zur Brennstoffzelle 20 geführte Luft verdichtet. Dieser Schritt wird insbesondere dann durchgeführt, wenn der Druck der über die wenigstens eine Durchströmungsöffnung aus dem Luftkanal entnommenen Luft geringer ist, als zur Zuführung zur Brennstoffzelle für deren Betrieb nötig ist.

In einem nächsten Verfahrensschritt e) wird die nach der Lufteinlassöffnung 11 im Luftkanal 10 verdichtete Luft auf wenigstens eine Kühlfläche des Wärmetauschers 21 geleitet, um Wärmeenergie vom Wärmetauscher 21 aufzunehmen und von dort abzuführen.

In einem weiteren optionalen Verfahrensschritt e1) erfolgt ein Beschleunigen der Luft im Luftkanal 10 nach dem Überströmen des Wärmetauscher 21, damit die Luft bei einem nachfolgenden Abführen an die Umgebung zusätzlichen Schub für das Luftfahrzeug 1 zur Verfügung stellen kann. In einem noch weiteren optionalen Verfahrensschritt e1) erfolgt ein Zuführen der Abluft aus der Brennstoffzelle 20 in den Luftkanal 10 nach dem Überströmen des Wärmetauschers 21, wodurch dem Luftstrom zusätzliche Masse und Enthalpie zugeführt wird, wodurch auch ein zusätzlicher Schub beim Abführen der Luft aus der Luftauslassöffnung 12 an die Umgebung ermöglicht wird.

Schließlich wird in einem weiteren Verfahrensschritt f) des vorgeschlagenen Verfahrens die Luft insbesondere durch die Luftauslassöffnung 12 wieder aus dem Luftkanal 10 abgeführt. Insbesondere hat die Luft während dem Verfahren Energie zum Erzeugen eines zusätzlichen Schubs aufgenommen, welcher abhängig von der Positionierung und Gestaltung der Luftauslassöffnung 12 zum Vortrieb des Luftfahrzeugs 1 zur Verfügung steht.

### BEZUGSZEICHENLISTE

- 1: Luftfahrzeug
- 5: Strömungsrichtung
- 10: Luftkanal
- 11: Lufteinlassöffnung
- 12: Luftauslassöffnung
- 20: Brennstoffzelle
- 21: Wärmetauscher
- 30: Luftversorgungseinrichtung
- 33: Verdichtereinrichtung
- 34: sich verringernder Bereich der Umfangsfläche des Luftkanals
- 35: sich erweiternder Bereich der Umfangsfläche des Luftkanals
- 36: Durchströmungsöffnung
- 37: Luftzufuhrkanal
- 38: Luftzufuhröffnung

## Patentansprüche

1. Luftfahrzeug mit einer Brennstoffzelle (20) und einer Luftversorgungseinrichtung (30) zum Zuführen von Luft zum Betrieb der Brennstoffzelle (20) sowie zum Kühlen eines mit der Brennstoffzelle (20) verbundenen Wärmetauschers (21), wobei das Luftfahrzeug (1) wenigstens einen Luftkanal (10) aufweist, dessen Querschnitt sich in Strömungsrichtung (5) der Luft nach einer Lufteinlassöffnung (11) in wenigstens einem Bereich (35) der Umfangsfläche erweitert, **dadurch gekennzeichnet, dass** der Luftkanal (10) in dem wenigstens einen sich erweiternden Bereich (35) der Umfangsfläche wenigstens eine Durchströmungsöffnung (36) aufweist, durch welche Luft zum Betrieb der Brennstoffzelle (20) abführbar ist.

2. Luftfahrzeug nach Anspruch 1, **dadurch gekennzeichnet, dass** der Wärmetauscher (21) in dem erweiterten Querschnitt des Luftkanals (10) angeordnet ist.

3. Luftfahrzeug nach wenigstens einem der vorhergehenden Ansprüche, **dadurch gekennzeichnet, dass** sich der Querschnitt des Luftkanals (10) in Strömungsrichtung (5) vor einer Luftauslassöffnung (12) verringert.

4. Luftfahrzeug nach wenigstens einem der vorhergehenden Ansprüche, **dadurch gekennzeichnet, dass** der Luftkanal (10) wenigstens eine Luftzufuhröffnung (38) zum Zuführen von Abluft der Brennstoffzelle (20) vor einer Luftauslassöffnung (12) aufweist.

5. Luftfahrzeug nach wenigstens einem der vorhergehenden Ansprüche, **dadurch gekennzeichnet, dass** die wenigstens eine Durchströmungsöffnung (36) mit einem Luftzufuhrkanal (37) zum Zuführen der Luft zur Brennstoffzelle (20) verbunden ist, wobei der Luftzufuhrkanal (37) mit einer Verdichtereinrichtung (33) zum Verdichten der Luft vor dem Zuführen zur Brennstoffzelle (20) und/ oder zum Absaugen der Luft durch die Durchströmungsöffnung (36) aus dem Luftkanal (10) verbunden ist.

6. Luftfahrzeug nach wenigstens einem der vorhergehenden Ansprüche, **dadurch gekennzeichnet, dass** die Brennstoffzelle (20) Teil des Flugantriebs ist.

7. Verfahren zum Betrieb einer Brennstoffzelle (20) eines Luftfahrzeugs (1) mit einer Luftversorgungseinrichtung (30) zum Betreiben der Brennstoffzelle (20) sowie zum Kühlen eines mit der Brennstoffzelle (20) verbundenen Wärmetauschers (21), wobei das Luftfahrzeug (1) wenigstens einen Luftkanal (10) aufweist, dessen Querschnitt sich in Strömungsrichtung (5) der Luft nach einer Lufteinlassöffnung (11) in wenigstens einem Bereich (35) der Umfangsfläche erweitert, in welchem eine Durchströmungsöffnung (36) zum Abführen von Luft zum Betrieb der Brennstoffzelle (20) angeordnet ist, wobei das Verfahren folgende Schritte umfasst:
a) Führen von Luft durch die Lufteinlassöffnung (11) in den Luftkanal;
b) Verdichten der Luft im Luftkanal (10) nach der Lufteinlassöffnung (11);
c) Abführen von verdichteter Luft aus dem Luftkanal (10) durch die wenigstens eine Durchströmungsöffnung (36);
d) Führen der Luft von der Durchströmungsöffnung (36) zur Brennstoffzelle (20);
e) Leiten der verdichteten Luft auf wenigstens eine Kühlfläche des Wärmetauschers (21); und
f) Abführen der Luft aus dem Luftkanal (10).

8. Verfahren zum Betrieb einer Brennstoffzelle eines Luftfahrzeugs gemäß Anspruch 7, **dadurch gekennzeichnet, dass** das Abführen der Luft durch die wenigstens eine Durchströmungsöffnung (36) mithilfe eines Sogs erfolgt.

9. Verfahren zum Betrieb einer Brennstoffzelle eines Luftfahrzeugs gemäß einem der Ansprüche 7 oder 8, **gekennzeichnet durch** den weiteren Schritt:
d1) Verdichten der von der Durchströmungsöffnung (36) zur Brennstoffzelle (20) geführten Luft.

10. Verfahren zum Betrieb einer Brennstoffzelle eines Luftfahrzeugs gemäß einem der Ansprüche 7 bis 9, **gekennzeichnet durch** den weiteren Schritt:
e1) Beschleunigen der Luft vor dem Abführen aus dem Luftkanal (10).

11. Verfahren zum Betrieb einer Brennstoffzelle eines Luftfahrzeugs gemäß einem der Ansprüche 7 bis 10, **gekennzeichnet durch** den weiteren Schritt:
e2) Zuführen der Abluft aus der Brennstoffzelle (20) vor dem Abführen der Luft aus dem Luftkanal (10).

12. Verfahren zum Betrieb einer Brennstoffzelle eines Luftfahrzeugs gemäß einem der Ansprüche 7 bis 11, **dadurch gekennzeichnet, dass** das Luftfahrzeug (1) gemäß wenigstens einem der Ansprüche 1 bis 6 ausgebildet ist.

## Claims

1. Aircraft comprising a fuel cell (20) and an air supply device (30) for supplying air for operating the fuel cell (20) and for cooling a heat exchanger (21) connected to the fuel cell (20), the aircraft (1) having at least one air duct (10),the cross section of which widens in the flow direction (5) of the air downstream of an air inlet opening (11) in at least one region (35) of the circumferential surface, **characterized in that** the air duct (10) has at least one through-flow opening (36) in the at least one widening region (35) of the circumferential surface, through which air can be discharged for operating the fuel cell (20).

2. Aircraft according to claim 1, **characterized in that** the heat exchanger (21) is arranged in the widened cross section of the air duct (10).

3. Aircraft according to at least one of the preceding claims,
**characterized in that** that the cross section of the air duct (10) decreases in the flow direction (5) upstream of an air outlet opening (12).

4. Aircraft according to at least one of the preceding claims,
**characterized in that** that the air duct (10) has at least one air supply opening (38) for supplying exhaust air from the fuel cell (20) upstream of an air outlet opening (12).

5. Aircraft according to at least one of the preceding claims,
**characterized in that** that the at least one through-flow opening (36) is connected to an air supply duct (37) for supplying the air to the fuel cell (20), the air supply duct (37) being connected to a compressor device (33) for compressing the air before it is supplied to the fuel cell (20) and/or for drawing the air out of the air duct (10) through the through-flow opening (36).

6. Aircraft according to at least one of the preceding claims,
**characterized in that** the fuel cell (20) is part of the flight propulsion system.

7. Method for operating a fuel cell (20) of an aircraft (1) comprising an air supply device (30) for operating the fuel cell (20) and for cooling a heat exchanger (21) connected to the fuel cell (20), wherein the aircraft (1) has at least one air duct (10), the cross section of which widens in the flow direction (5) of the air downstream of an air inlet opening (11) in at least one region (35) of the circumferential surface, in which a through-flow opening (36) for discharging air for operating the fuel cell (20) is arranged,
wherein the method comprises the following steps:
a) guiding air through the air inlet opening (11) into the air duct;
b) compressing the air in the air duct (10) downstream of the air inlet opening (11);
c) discharging compressed air from the air duct (10) through the at least one through-flow opening (36);
d) guiding the air from the through-flow opening (36) to the fuel cell (20);
e) conducting the compressed air onto at least one cooling surface of the heat exchanger (21); and
f) discharging the air from the air duct (10).

8. Method for operating a fuel cell of an aircraft according to claim 7, **characterized in that** the air is discharged through the at least one through-flow opening (36) by means of suction.

9. Method for operating a fuel cell of an aircraft according to either claim 7 or claim 8, **characterized by** the additional step of:
d1) compressing the air guided from the through-flow opening (36) to the fuel cell (20).

10. Method for operating a fuel cell of an aircraft according to any of claims 7 to 9, **characterized by** the additional step of:
e1) accelerating the air before it is discharged from the air duct (10).

11. Method for operating a fuel cell of an aircraft according to any of claims 7 to 10, **characterized by** the additional step of:
e2) supplying the exhaust air from the fuel cell (20) before the air is discharged from the air duct (10).

12. Method for operating a fuel cell of an aircraft according to any of claims 7 to 11 **characterized in that** the aircraft (1) is designed according to at least one of claims 1 to 6.

## Revendications

1. Aéronef comportant une pile à combustible (20) et un dispositif d'alimentation en air (30) permettant l'amenée d'air pour le fonctionnement de la pile à combustible (20) et pour le refroidissement d'un échangeur de chaleur (21) relié à la pile à combustible (20), l'aéronef (1) présentant au moins un canal d'air (10) dont la section transversale s'agrandit dans le sens d'écoulement (5) de l'air en aval d'une ouverture d'entrée d'air (11) dans au moins une région (35) de la surface périphérique, **caractérisé en ce que** le canal d'air (10) présente, dans l'au moins une région (35) s'agrandissant de la surface périphérique, au moins une ouverture d'écoulement (36) à travers laquelle de l'air pour le fonctionnement de la pile à combustible (20) peut être évacué.

2. Aéronef selon la revendication 1, **caractérisé en ce que** l'échangeur de chaleur (21) est disposé dans la section transversale agrandie du canal d'air (10).

3. Aéronef selon au moins l'une des revendications précédentes,
**caractérisé en ce que** la section transversale du canal d'air (10) se réduit dans le sens d'écoulement (5) en amont d'une ouverture de sortie d'air (12).

4. Aéronef selon au moins l'une des revendications précédentes,
**caractérisé en ce que** le canal d'air (10) présente au moins une ouverture d'amenée d'air (38) permettant l'amenée d'air d'évacuation de la pile à combustible (20) en amont d'une ouverture de sortie d'air (12).

5. Aéronef selon au moins l'une des revendications précédentes,
**caractérisé en ce que** l'au moins une ouverture d'écoulement (36) est reliée à un canal d'amenée d'air (37) permettant l'amenée de l'air jusqu'à la pile à combustible (20), le canal d'amenée d'air (37) étant relié à un dispositif compresseur (33) permettant de comprimer l'air avant l'amenée jusqu'à la pile à combustible (20) et/ou permettant l'aspiration de l'air à travers l'ouverture d'écoulement (36) hors du canal d'air (10).

6. Aéronef selon au moins l'une des revendications précédentes,
**caractérisé en ce que** la pile à combustible (20) fait partie du système de propulsion d'aéronef.

7. Procédé permettant de faire fonctionner une pile à combustible (20) d'un aéronef (1) comportant un dispositif d'alimentation en air (30) pour le fonctionnement de la pile à combustible (20) et pour le refroidissement d'un échangeur de chaleur (21) relié à la pile à combustible (20), l'aéronef (1) présentant au moins un canal d'air (10) dont la section transversale s'agrandit dans le sens d'écoulement (5) de l'air en aval d'une ouverture d'entrée d'air (11) dans au moins une région (35) de la surface périphérique, région dans laquelle est disposée une ouverture d'écoulement (36) permettant l'évacuation d'air pour le fonctionnement de la pile à combustible (20),
le procédé comprenant les étapes suivantes :
a) guidage d'air à travers l'ouverture d'entrée d'air (11) dans le canal d'air ;
b) compression de l'air dans le canal d'air (10) en aval de l'ouverture d'entrée d'air (11) ;
c) évacuation de l'air comprimé hors du canal d'air (10) à travers l'au moins une ouverture d'écoulement (36) ;
d) guidage de l'air depuis l'ouverture d'écoulement (36) jusqu'à la pile à combustible (20) ;
e) orientation de l'air comprimé vers au moins une surface de refroidissement de l'échangeur de chaleur (21) ; et
f) évacuation de l'air hors du canal d'air (10).

8. Procédé permettant de faire fonctionner une pile à combustible d'un aéronef selon la revendication 7, **caractérisé en ce que** l'évacuation de l'air à travers l'au moins une ouverture d'écoulement (36) s'effectue à l'aide d'une aspiration.

9. Procédé permettant de faire fonctionner une pile à combustible d'un aéronef selon l'une des revendications 7 ou 8, **caractérisé par** l'étape supplémentaire consistant à : d1) comprimer l'air guidé depuis l'ouverture d'écoulement (36) jusqu'à la pile à combustible (20).

10. Procédé permettant de faire fonctionner une pile à combustible d'un aéronef selon l'une des revendications 7 à 9, **caractérisé par** l'étape supplémentaire consistant à :
e1) accélérer l'air avant l'évacuation hors du canal d'air (10).

11. Procédé permettant de faire fonctionner une pile à combustible d'un aéronef selon l'une des revendications 7 à 10, **caractérisé par** l'étape supplémentaire consistant à :
e2) amener l'air d'évacuation hors de la pile à combustible (20) avant l'évacuation de l'air hors du canal d'air (10).

12. Procédé permettant de faire fonctionner une pile à combustible d'un aéronef selon l'une des revendications 7 à 11, **caractérisé en ce que** l'aéronef (1) est réalisé selon au moins l'une des revendications 1 à 6.
